# EUROPÄISCHE PATENTSCHRIFT

(11) **EP 4 302 163 B1**
(45) Veröffentlichungstag und Bekanntmachung des Hinweises auf die Patenterteilung: **03.12.2025**
(21) Anmeldenummer: 22712274.4
(22) Anmeldetag: 22.02.2022
(51) Int. Cl.: G05B 23/02

(54) **VERFAHREN UND SYSTEM ZUR EVALUIERUNG EINER NOTWENDIGEN INSTANDHALTUNGSMASSNAHME FÜR EINE MASCHINE, INSBESONDERE FÜR EINE PUMPE**
METHOD AND SYSTEM FOR EVALUATING A NECESSARY MAINTENANCE MEASURE FOR A MACHINE, MORE PARTICULARLY FOR A PUMP
PROCÉDÉ ET SYSTÈME D'ÉVALUATION D'UNE MESURE DE MAINTENANCE NÉCESSAIRE POUR UNE MACHINE, PLUS PARTICULIÈREMENT POUR UNE POMPE

(30) Priorität: 01.03.2021 DE 102021104826
(43) Veröffentlichungstag der Anmeldung: 10.01.2024
(73) Patentinhaber: KSB SE & Co. KGaA, 67227 Frankenthal (DE)
(72) Erfinder: EMDE, Christoph, 2511 Luxemburg (LU); LAUE, Stefan, 67227 Frankenthal (DE)
(86) Internationale Anmeldenummer: PCT/EP2022/054403
(87) Internationale Veröffentlichungsnummer: WO 2022/184505

(56) Entgegenhaltungen:
- EP-A1- 3 712 728
- US-A1- 2004 030 524
- US-A1- 2017 083 822
- US-A1- 2018 197 354
- US-A1- 2021 048 809

## Beschreibung

Die Erfindung betrifft ein Verfahren zur Evaluierung einer notwendigen Instandhaltungsmaßnahme für eine Maschine, insbesondere für eine Pumpe.

Bestehende maschinelle Industrieanlagen, insbesondere Pumpen, müssen ständig auf ihre ordnungsgemäße Funktion und Arbeitsweise überwacht werden. Ein besonderes Anliegen ist dabei die frühzeitige Erkennung möglicher Verschleißerscheinungen und Bauteilfehler, um möglichst rechtzeitig entsprechende Warnmeldungen und Instandhaltungsmaßnahmen ergreifen zu können bevor ein größerer Maschinenschaden bis hin zu einem Totalausfall der Maschine auftritt.

US 2021/048809 A1 offenbart eine Multitask-Learning-Architektur, die Sensor- und Ereignisdaten integriert, um Fehler- und Ausfallvorhersagen sowie die verbleibende Nutzungsdauer von Maschinenkomponenten zu schätzen.

Die genaue Erfassung des aktuellen Verschleißzustandes einer Maschine ist in der Praxis häufig schwierig und wenig zuverlässig. Dies gilt umso mehr, da Maschinen, insbesondere solche mit rotierbaren Bauteilen, aus verschiedenen Teilkomponenten bestehen, die unterschiedlich verschleißanfällig sind. Auch unterliegen solche Maschinen zahlreichen Einflüssen von außen, die sich auf den Verschleißfortschritt der Maschine auswirken können. Aufgrund der enormen Anzahl von relevanten Einflussfaktoren steigt die Komplexität und eine Erfassung des aktuellen Verschleißzustandes ist in der Realität kaum umsetzbar.

Der Gegenstand der vorliegenden Anmeldung beschäftigt sich daher mit einem Verfahren zur Vorhersage möglicher Verschleiß- bzw. Ausfallrisiken, um auf einer risikobasierten Auswertung entsprechende Maßnahmen für die Instandhaltung ergreifen zu können.

Gelöst wird diese Aufgabe durch ein Verfahren gemäß den Merkmalen des Anspruchs 1. Weitere Vorteile des Verfahrens sind Gegenstand der abhängigen Ansprüche.

Erfindungsgemäß wird vorgeschlagen, dass zunächst ein oder mehrere, für den Verschleiß oder Schaden einer Maschine und/oder eines Bauteils der Maschine relevante Einflussgrößen durch die Maschine ermittelt werden. Als relevante Einflussgröße wird eine messbare Größe verstanden, die einen nicht zu vernachlässigbaren Einfluss auf den Verschleißfortschritt der Maschine bzw. wenigstens eines Bauteils der Maschine hat und sich damit auch auf die Ausfallwahrscheinlichkeit bzw. das Ausfallrisiko des betrachteten Bauteils oder der Maschine auswirkt. Einflussgrößen lassen sich in betriebsbedingte und betriebsunabhängige Einflüsse trennen. Erstere variieren abhängig vom aktuellen Betriebszustand bzw. etwaiger Betriebsparameter, wie Druckwerte, Schwingungen, Betriebspunkte, Temperaturwerte, Betriebsdauer, Stillstandzeiten, usw.. Betriebsunabhängige Einflussgrößen sind mehr oder weniger starr, darunter fallen die Material- und Montagequalität, Fertigungstoleranzen, Alter der Bauteile, etwaige Vorschäden, usw..

Die ermittelten Einflussgrößen werden von der Maschine an eine Auswerteeinheit, übertragen, welche die empfangenen Einflussgrößen einem Schätzungsmodell zuführt. Ein solches Modell kann auf Grundlage der eingehenden Einflussgrößen das Ausfallrisiko und/oder eine Auswahlwahrscheinlichkeit für die Maschine und/oder ein Bauteil der Maschine ermitteln. Die ermittelte Ausfallwahrscheinlichkeit bzw. das Ausfallrisiko bietet dann die Grundlage für eine Entscheidung, ob die Auswerteeinheit automatisch eine Empfehlung für eine geeignete Instandhaltungsmaßnahme generieren und aussprechen soll.

Beispielsweise besteht die Möglichkeit, eine solche Empfehlung zu generieren, wenn ein entsprechender Grenzwert für ein Ausfallrisiko bzw. eine Wahrscheinlichkeit überschritten wird. Denkbar ist es ebenso, dass das Verfahren zur Überwachung mehrerer Maschinen eingesetzt wird und eine Empfehlung stets für die Maschine mit der höchsten Ausfallwahrscheinlichkeit erzeugt wird.

Die Auswerteeinheit kann beispielsweise an der Maschine angebracht oder in einer Schaltwarte vorgesehen sein. Ebeno kann sich die Auswerteeinheit als Softwaremodul auf einem Server einer Serverfarm befinden.

Gemäß einer bevorzugten Ausführung des Verfahrens ermittelt das Schätzungsmodell die individuellen, insbesondere voneinander unabhängigen Ausfallwahrscheinlichkeiten einzelner Maschinenbauteile. Die Ausfallwahrscheinlichkeit bzw. das Ausfallrisiko der Gesamtmaschine kann aus den individuellen Ausfallwahrscheinlichkeiten bestimmt werden. Dies erfolgt durch Addition der individuellen Ausfallwahrscheinlichkeiten und Abzug des Produkts.

Erfindungsgemäß ist oder umfasst das Schätzungsmodell ein Schädigungsrelevanzmodell.

Das Schädigungsrelevanzmodell beschreibt den Zusammenhang zwischen ein oder mehrerer Einflussgrößen auf mögliche Schäden und/oder Verschleißerscheinungen eines Bauteils oder der Maschine. Mittels dieses Modells kann dann bei Zuführung der aktuellen Eingangsgrößen der aktuelle Verschleißfortschritt und/oder Schadensgrad eines Bauteils und/oder Maschine abgeschätzt werden und nachfolgend als Grundlage für eine Bewertung des Ausfallrisikos bzw. der Ausfallwahrscheinlichkeit eines Bauteils und/oder der Maschine dienen.

Erfindungsgemäß wird für das Schädigungsrelevanzmodell ein Maschinen-Lern-Algorithmus (MLA) eingesetzt. Dadurch lassen sich die Modellqualität und die resultierende Genauigkeit der geschätzten Ausfallwahrscheinlichkeit mit zunehmender Erfahrung optimieren. Dem Maschinen-Lern-Algorithmus werden insbesondere Daten manueller Stichproben, d.h. während einer manuellen Inaugenscheinnahme der Maschinen gesammelte Daten, als Modelltrainingssätze bereitgestellt. Besonders bietet sich eine solche Generierung von Trainingsdatensätze während der Durchführung manueller Instandhaltungs- oder Reparaturmaßnahmen an der Maschine an. Vorstellbar ist es, dass ein solcher Trainingsdatensatz wenigstens einen von der jeweiligen Fachkraft abgeschätzten Risikowert/Wahrscheinlichkeitswert für den Ausfall eines Bauteils und/oder der Maschine enthält. Idealerweise zusammen mit ein oder mehreren Einflussgrößen, die den Schätzwert beeinflussen.

Als Maschinen-Lern-Algorithmus ist neben anderen möglichen Algorithmen ein neuronales Netz oder auch eine Support-Vector-Maschine bevorzugt.

Die manuell generierten Trainingsdatensätze werden erfindungsgemäß um einen Korrekturfaktor ergänzt. Ein solcher Korrekturfaktor definiert eine Art Toleranzbereich für mögliche Abweichungen vom Schätzwert. Erfindungsgemäß ist die Definition eines Korrekturfaktors mittels zeitabhängiger Funktion, so dass sich der Wert über die Lebensdauer dieses Trainingssatzes ändern kann. Sinnvollerweise nimmt der Korrekturfaktor mit zunehmender Lebensdauer des Trainingsdatensatzes ab. Wurden bspw. über einen längeren Zeitraum ausreichend viele Trainingsdatensätze generiert und gesammelt, so können die jeweiligen Korrekturfaktoren reduziert werden, was mittels der Zeitfunktion umgesetzt wird.

Idealerweise lassen sich dem Schädigungsrelevanzmodell nicht nur solche Trainingsdatensätze zuführen, die unmittelbar für die aktuell betrachtete Maschine erstellt worden sind, sondern es sollten auch solche Trainingsdatensätze berücksichtigt werden, die für identische oder vergleichbare Maschinen bzw. Bauteile erzeugt worden sind. Dazu wird eine Datenbank installiert, die sämtliche generierten Trainingsdatensätze für unterschiedliche Maschinen und Bauteile verwaltet. Dabei ist vorgesehen, dass die Datenbank ein Clustering der Maschinen und/oder Bauteile ausführt, um identische oder ähnliche Maschinen/Bauteile gemeinsamen Clustern zuzuordnen.

Die Auswerteeinheit kann dann sämtliche Trainingsdatensätze eines Clusters von Maschinen/Bauteilen für das Modelltraining verwenden, zu diesem auch die betrachtete Maschine/Bauteil zuzuordnen ist. Dadurch kann der Vorrat an Trainingssätzen und damit die Trainingsqualität des Schädigungsrelevanzmodells deutlich verbessert werden.

Für die Clusterung der Maschinen bzw. Bauteile können neben der konstruktiven Ähnlichkeit der Maschinen/Bauteile auch die Ähnlichkeit der relevanten Einflussgrößen für die Ausfallwahrscheinlichkeit Berücksichtigung finden. Ein weiteres Kriterium für die Clusterung kann auch die Ähnlichkeit der Maschinenanwendung und damit einhergehende Betriebsbedingungen sein. Konkret können in diesem Zusammenhang die Frequenz schneller Lastwechsel der Maschine und/oder Umgebungsbedingungen der Maschine relevant sein. Zu letzterem zählen bei Kreiselpumpen bspw. die Art und Eigenschaften des Fördermediums.

Besonders vorteilhaft ist es, wenn das Schädigungsrelevanzmodell nach einer erfolgten Maschinenwartung durch den Fachmann oder nach dem Ausfall eines spezifischen Bauteils der Maschine zurückgesetzt wird und im Anschluss nochmals initial neu trainiert wird. Für das Neutraining sollen dann bestenfalls sämtliche verfügbare Trainingsdatensätze der Maschine/Bauteils bzw. des Bauteils-/Maschinenclusters verwenden werden. Alternativ kann auf ein Zurücksetzen des Modells verzichtet werden und dieses stattdessen mit allen verfügbaren Trainingssätzen nachtrainiert werden.

Um die Kosten und den Ressourcenaufwand für die Datenerfassung wirtschaftlich zu gestalten, insbesondere im Hinblick auf Maschinen mit durchschnittlichen Ausfallfolgekosten, werden innerhalb des Modells nur elementare Einflussgrößen für die Berechnung bzw. Bestimmung der Ausfallwahrscheinlichkeit/-risiken berücksichtigt. Zu den elementaren Einflussgrößen lassen sich beispielsweise die Belastungsdauer der Maschine bzw. eines spezifischen Maschinenbauteils zuordnen. Denkbar ist auch die Berücksichtigung des aktuellen Betriebspunktes und/oder Betriebspunktprofils der Maschine/des Bauteils als elementare Einflussgröße. Ebenso kann die Betriebszeit und/oder Stillstandzeit der Maschine bzw. des Bauteils als elementare Einflussgröße betrachtet werden. Selbiges trifft auf die Betriebsweise, d.h. Frequenz von Schaltvorgängen oder Lastwechseln zu. Eine weitere elementare Einflussgröße kann die Umgebungs- oder Mediumtemperatur sein. Ein oder mehrere der vorgenannten Einflussgrößen werden dann dem Schädigungsrelevanzmodell zugeführt.

Der Berechnungsaufwand der Auswerteeinheit steigt mit zunehmendem Umfang an Einflussgrößen. Gleiches gilt für den Fall, das mehrdimensionale Einflussgrößen verwendet werden, d.h. Einflussgrößen, die von mehreren Parametern abhängen. Vorstellbar ist es in diesem Zusammenhang, die wenigstens eine Einflussgröße einer Datenvorverarbeitung zu unterziehen. Hier bietet sich bspw. die Integration der Einflussgrößen über eine der abhängigen Variablen an. Zeitabhängige Einflussgrößen können über die Zeit integriert werden. Die integrierte Einflussgröße wird dann dem Schädigungsrelevanzmodell anstatt der originären Einflussgröße zugeführt.

Die Bestimmung der Einflussgrößen durch die Maschine kann idealerweise messtechnisch erfolgen. Dabei können die Einflussgrößen entweder unmittelbar gemessen oder aber aus anderen Messwerten abgeleitet werden. Bevorzugt ist eine "online" Messung während des regulären Maschinenbetriebs, insbesondere kontinuierlich, periodisch oder auch zufällig. Gegebenenfalls können bestimmte Einflussgrößen aus technischen oder wirtschaftlichen Gründen nicht "online" gemessen werden. Falls möglich sollten diese Einflussgrößen zumindest einmalig gemessen und/oder geschätzt werden. Sinnvollerweise werden zu derartigen nicht-online messbaren Einflussgrößen weitergehende charakteristische Informationen erstellt, die die Einflussgröße und deren Verhalten beschreiben. Denkbar sind hier Angaben über Minimal- und/oder Maximalwerte der Einflussgröße und/oder Periodizität, usw.

Zudem können auch fremderregte Schwingungen, beispielsweise durch Nachbarmaschinen bei der stehenden Maschine zu einer stärkeren Beeinträchtigung der Wälzlager-Geometrie als bei einer laufenden Maschine führen.

Für die Generierung einer Empfehlung für eine Instandhaltungsmaßnahme kann neben der Ausfallwahrscheinlichkeit/Ausfallrisiko ergänzend ein vom Nutzer definierbarer Risikobereitschaftswert berücksichtigt werden. Mittels des Risikobereitschaftswertes kann der Schwellwert für die Ausfallwahrscheinlichkeit bzw. das Ausfallrisiko verschoben werden. Der Maschinenbetreiber kann so vorgeben, ob ein vergleichsweise geringes oder hohes Risiko für einen Ausfall in Kauf genommen werden soll, bevor eine Instandhaltungsmaßnahme tatsächlich empfohlen und ausgeführt wird.

Neben dem erfindungsgemäßen Verfahren betrifft die vorliegende Erfindung ein System umfassend eine Auswerteeinheit und ein oder mehrere zu überwachende Maschinen. Optional kann das System mit einer Datenbank zur Speicherung von Trainingsdatensätzen, insbesondere nach Maschinen/Bauteilen geclusterten Trainingsdatensätzen ausgestattet sein. Die Auswerteeinheit umfasst ein Programm, dessen Befehle die Ausführung des erfindungsgemäßen Verfahrens bewirken. Demzufolge zeichnet sich das System durch dieselben Vorteile und Eigenschaften aus, wie sie bereits vorstehend anhand des erfindungsgemäßen Verfahrens aufgezeigt wurden. Auf eine wiederholende Beschreibung kann aus diesem Grund verzichtet werden.

Weitere Vorteile und Eigenschaften der Erfindung sollen nachfolgend anhand eines in den Figuren dargestellten Ausführungsbeispiels näher erläutert werden. Es zeigen:
- Figur 1:: eine Tabelle zur Übersicht über betriebsbedingte und betriebsunabhängige Einflussgrößen bei einer Kreiselpumpe,
- Figur 2:: ein Betriebsstundenhistogramm,
- Figur 3:: ein schematisch dargestelltes künstliches neuronales Netz zur Abbildung eines Betriebsstundenhistogramms auf das Ausfallrisiko und
- Figur 4a, 4b:: Blockdiagramme zur Verdeutlichung des erfindungsgemäßen Verfahrens,

Das erfindungsgemäße Verfahren bietet eine praxistaugliche und nutzenstiftende Alternative zur zustandsorientierten Instandhaltung. Im Gegensatz zu dieser geht das erfindungsgemäße Verfahren davon aus, dass der Verschleißzustand kaum erfasst und bewertet werden kann, wohl aber ein Zusammenhang zwischen der Betriebsweise einer Kreiselpumpe und deren Ausfallwahrscheinlichkeit besteht.

Erfindungsgemäß fließen für Verschleiß bzw. Schädigung relevanten Größen des Betriebs in ein Modell ein, das durch Rückmeldungen des Instandhalters weiterhin abgestimmt werden kann. Das Schädigungsrelevanzmodell kann auf eine große Datenbasis (Cloud, big data) zurückgreifen und damit auch die Rückmeldung vieler Instandhalter einbeziehen.

Eine risikobasierte Instandhaltungsempfehlung basiert dann auf der Statistik zur Ausfallwahrscheinlichkeit des Pumpenaggregates in der nahen Zukunft unter Einbezug der "Risikobereitschaft" des Instandhalters oder Betreibers der Pumpe. So kann ein "vorsichtiger" Instandhalter, der hier eine niedrige "Risikobereitschaft" einstellt, zu einem relativ frühen Zeitpunkt eine Instandhaltungsempfehlung bekommen, womit seine Instandhaltungsstrategie im weitesten Sinne "präventiv" ist. Ein Instandhalter, der eine größere "Risikobereitschaft" einstellt, bekommt zu einem späteren Zeitpunkt bei vergleichbaren Betriebsparametern eine Instandhaltungsempfehlung und riskiert damit eine höhere Ausfallwahrscheinlichkeit, er geht somit ein höheres Risiko ein, reaktive Instandhaltungsmaßnahmen durchzuführen.

Zu Beginn, wird ein solches System noch auf keine validierten Daten für ein Schädigungsrelevanzmodell zurückgreifen können. Dennoch wird von Beginn an ausgehend vom Status Quo, präventiver und reaktiver Instandhaltung keine Verschlechterung zu erwarten sein. Mit wachsender Zahl eingeschlossener Pumpenpopulationen werden Schädigungsrelevanzmodelle zunehmend besser auf verschiedene Pumpentypen und Einsatzbedingungen abgestimmt. Daraus resultiert ein steigender Kundennutzen (eine höhere "Mean Time Between Failures" (kurz: MTBF) und eine bessere Ausnutzung von Verschleißvorräten sind zu erwarten) und ein Rückfluss von tatsächlichen Betriebsinformationen an den Maschinenhersteller.

Das Grundkonzept eines solchen Verfahrens zur risikobasierten Instandhaltungsempfehlung soll nachfolgend erläutert werden:

### Die Maschine

Die Maschine (z.B. eine Kreiselpumpe) besteht aus verschiedenen ausfallgefährdeten Bauteilen. In einem ersten vereinfachenden Ansatz ist die Ausfallwahrscheinlichkeit eines Bauteils unabhängig von denen der anderen Bauteile. Die Ausfallwahrscheinlichkeit der Maschine ist dann die Summe der einzelnen Ausfallwahrscheinlichkeiten abzüglich ihres Produkts.

### Bauteile und Beeinflussung ihrer Ausfallwahrscheinlichkeit

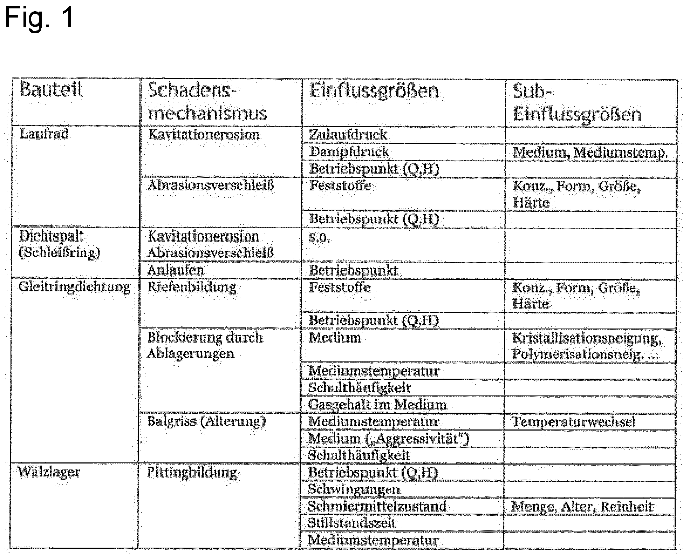

Die Maschinenbauteile unterliegen zahlreichen Einflüssen, die sich auf die Ausfallwahrscheinlichkeit auswirken. Im Folgenden werden betriebsbedingte und betriebsunabhängige Einflüsse unterschieden. Für eine Kreiselpumpe mit Wälzlagern sind die in der Tabelle der Figur 1 gelisteten Bauteile und deren betriebsbedingte Einflüsse besonders relevant.

Eine für alle Bauteile elementare Einflussgröße ist die Belastungsdauer. Dass es sich hierbei nicht immer nur um die Betriebszeit der Maschine handelt zeigen drei Beispiele:
- Verweilzeit von Polymeren (GLRD-Balg) in aggressiven Medien= Stillstandzeit+ Betriebszeit
- Dauer der axialen Lagerbelastung = Betriebszeit
- Dauer der Festkörperpressung in den Wälzlagern = Stillstandzeit

Darüber hinaus bestimmen folgende betriebsunabhängigen Einflüsse die Ausfallwahrscheinlichkeit der Bauteile:
- Montagequalität
- Materialqualität
- Fertigungstoleranzen
- Alter (Kunststoffe)
- Vorschäden (Transportschäden etc.)

### Schlussfolgerungen und Vorschlag

Die Ausfallwahrscheinlichkeit unterliegt einer Vielzahl von Einflüssen. Eine exakte Ermittlung bzw. Onlinemessung all dieser Einflussgrößen ist in Anwendungen mit durchschnittlichen Ausfallfolgekosten nicht wirtschaftlich. Um dennoch zu einer Abschätzung der Ausfallwahrscheinlichkeit zu gelangen, wird folgendes Vorgehen vorgeschlagen:
» Ermittlung bzw. messtechnische Erfassung der elementaren Einflussgrößen je Maschine (s.u.),
» Clusterung der Maschinenpopulation nach Ähnlichkeiten (s.u.)
» Ermittlung des Zusammenhangs zwischen den elementaren Einflussgrößen und der Ausfallwahrscheinlichkeit aus Stichproben für die Maschinen eines Clusters (multivariate Regressionsanalyse).

Der ermittelte Zusammenhang (*Ausfallwahrscheinlichkeit=f(xᵢ)*) ist clusterspezifisch. Er wird genutzt, um über die Durchführung von Instandhaltungsmaßnahmen zu entscheiden. Folgende Entscheidungsregeln sind denkbar: Es werden die Maschinen mit der höchsten Ausfallwahrscheinlichkeit instandgesetzt. Es werden die Maschinen instandgesetzt, deren Ausfallwahrscheinlichkeit über einem gewissen Grenzwert liegt.

### Elementare Einflussgrößen

Folgende Einflussgrößen werden aufgrund ihres überdurchschnittlichen Einflusses als "elementar" eingeschätzt:
- Belastungsdauer
- Betriebspunkt (Zulaufdruck, Enddruck, Förderstrom, Drehzahl)
- Betriebszeit/Stillstandzeit
- Schalthäufigkeit
- Medientemperatur

### Einflussgrößen mit Online-Messung

Mit Ausnahme der Medientemperatur kann eine Erfassung der elementaren Einflussgrößen mittelbar über Sensoren direkt gemessen oder geschätzt werden. Diese Erfassung hat den Charakter einer "Online-Messung" mit der Besonderheit, dass der Förderstrom über ein Modell der Pumpe geschätzt wird.

### Einflussgrößen ohne Online-Messung

Ggf. sind gewisse Einflussgrößen nicht mit vertretbarem Aufwand online erfassbar. Z.Z. wird dies insbesondere die Medientemperatur und die Maschinenschwingungen betreffen. Um diese dennoch zumindest grob berücksichtigen zu können, sollte zumindest eine einmalige Abschätzung oder Messung stattfinden. Idealer Weise stehen folgende weitergehende Informationen zur Verfügung: Durchschnittswert, Maximalwert, Minimalwert und Periodizität.

### Stichproben

Jede Instandhaltungsmaßnahme ist eine Stichprobe. Instandhaltungsmaßnahmen werden aufgrund einer hohen Ausfallwahrscheinlichkeit oder aufgrund eines tatsächlichen Ausfalls ausgeführt. In beiden Fällen wird eine Abschätzung der tatsächlich vorliegenden Ausfallwahrscheinlichkeit vorgenommen. Die Information fließt zurück in die Datenbasis. Anschließend wird die Regressionsanalyse wiederholt, um so sukzessive die Qualität der Ausfallwahrscheinlichkeitsschätzung zu verbessern.

### Clusterung

Die Clusterung erfolgt nach:
- Ähnlichkeit der Maschinen (z.B. Baugröße, Bauart),
- Ähnlichkeit der Einflussgrößen ohne Online-Messung (z.B. Mediumtemperatur, Schwingung) und
- Ähnlichkeit der Anwendungen (z.B. Medium, schnelle Lastwechsel).

Maschinen eines Clusters weisen in allen drei Punkten Ähnlichkeit auf.

In der zugrunde liegenden Datenbank werden streng genommen nicht die Maschinen, sondern deren ausfallrelevanten Bauteile verwaltet, geclustert und ihre Ausfallwahrscheinlichkeiten berechnet. Dadurch können auch Bauteile ansonsten stark unterschiedlicher Maschinen im gleichen Cluster landen. Vermutlich reduziert sich dadurch die Anzahl der Cluster. Dies wiederum ist von Vorteil, da mehr Bauteile in einem Cluster zu einem schnelleren Erkenntnisgewinn führen.

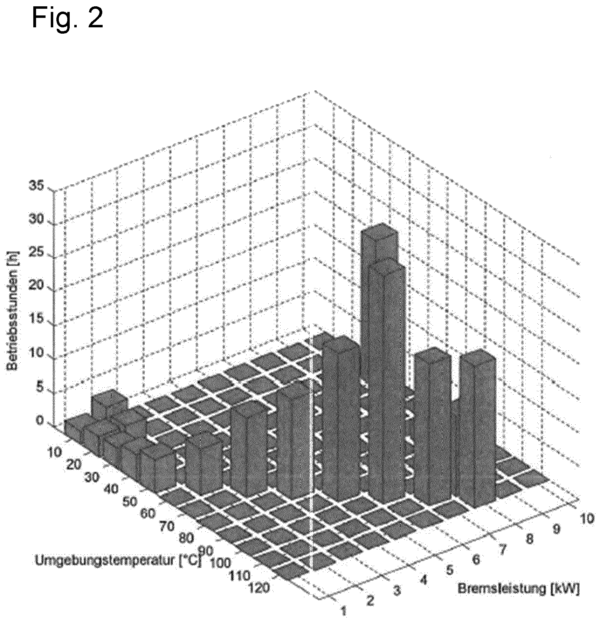

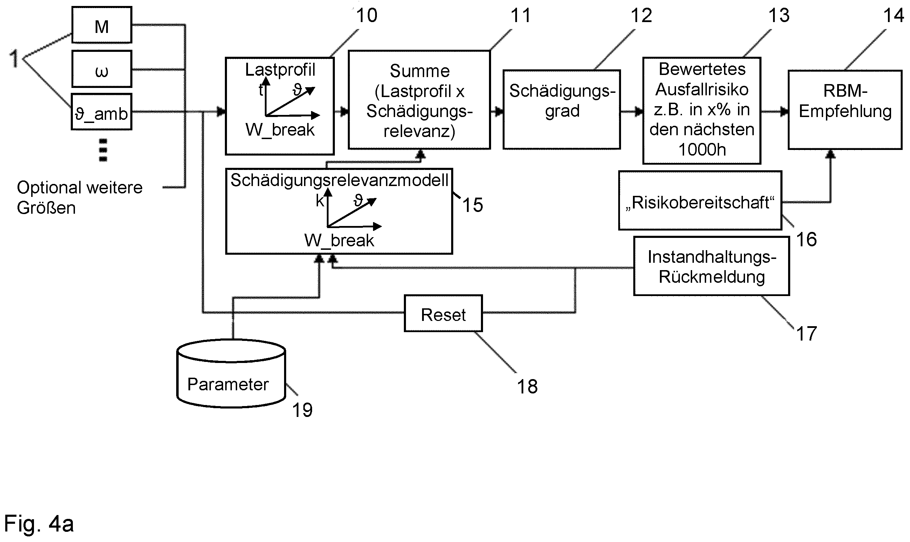

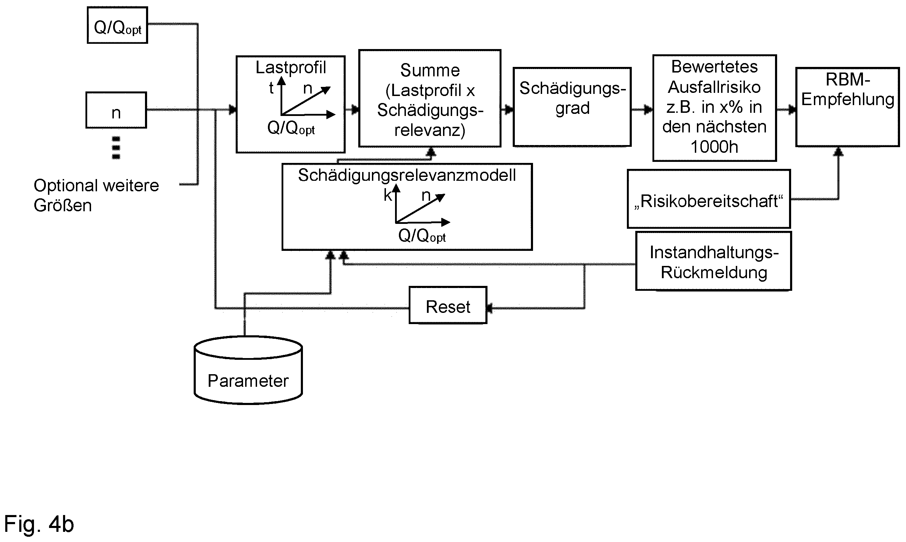

Das beispielhafte Blockdiagramm des Verfahrens zeigt die Figur 4a oder 4b. Nachfolgend soll das Verfahren nochmals konkret anhand einer Scheibenbremse (Figur 4a) erläutert werden:
Hier wird angenommen, dass die Lebensdauer einer Scheibenbremse im Wesentlichen von der verrichteten Bremsarbeit (*W_{break} =* ∫(*M · ω*)*dt* und der Umgebungstemperatur *ϑ_{amb}* abhängen. Der genaue Zusammenhang ist jedoch unbekannt. Um ihn zu erlernen soll folgende Methode angewandt werden:
Die belastungsrelevanten Einflussgrößen 1, hier Drehzahl *ω*, Drehmoment M und Umgebungstemperatur *ϑ_{amb}* werden gemessen. Aus den Messdaten wird ein Betriebsstundenhistogramm (diskretes Lastprofil) im Block 10 (s. Figur 4a) ermittelt. Ein Beispiel für ein solches Betriebsstundenhistogramm zeigt Figur 2.

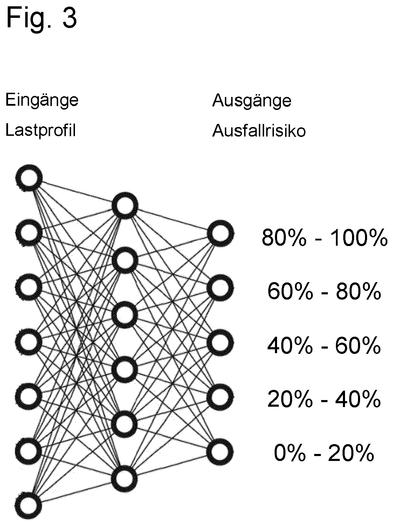

Das Betriebsstundenhistogramm repräsentiert die erfahrene Belastung. Die Information über die Reihenfolge der unterschiedlichen Belastungssituationen gehen allerdings verloren. Ein lernfähiger Klassifikator 15, z.B. ein künstliches neuronales Netz oder eine Support-Vector Machine, wird verwendet, um aus dem Betriebsstundenhistogramm 10 einen Schädigungsgrad 13 oder ein Ausfallrisiko 14 zu berechnen. Figur 3 zeigt ein Beispiel für ein künstliches Neuronales Netz zur Abbildung eines Betriebsstundenhistogramms auf das Ausfallrisiko.

Der Klassifikator 15 wird so initialisiert (mittels der Parameter 19), dass er für angenommene Betriebsstundenhistogramme vorstellbare Ergebnisse produziert. Gemeint sind hier Ausfallrisiken, die den bisherigen Erfahrungen entsprechen.

Für real erfasste Betriebsstundenhistogramme werden nun mit dem Klassifikator 15 Ausfallrisiken berechnet und dem Betreiber mitgeteilt. Konkret wird dem Betreiber hier eine Empfehlung für eine Instandhaltungsmaßnahme 14 angezeigt. Die Entscheidung, ob bzw. wann eine entsprechende Empfehlung 14 ausgesprochen wird, kann der Betreiber durch die definierbare Risikobereitschaft 16 beeinflussen. Die Risikobereitschaft verändert den Schwellwert der Ausfallwahrscheinlichkeit, bei dessen Überschreitung eine Empfehlung 14 generiert wird.

Im Einzelnen können sich folgende Szenarien ergeben:
- **Fall 1:**: Der Betreiber entschließt sich aufgrund eines hohen Ausfallrisikos zu einer Wartung.
- **Fall 1A:**: Der Betreiber stellt fest, dass das Ausfallrisiko zu hoch oder zu gering eingeschätzt wurde. Anhand dieser Einschätzung wird ein neuer Trainingsdatensatz 17 zur Verbesserung des Klassifikators 15 angelegt. Dieser Trainingsdatensatz 17 besteht aus dem aktuellen Betriebsstundenhistogramm und einer Vorgabe für das Ausfallrisiko. Diese Vorgabe ist das gemeldete Ausfallrisiko zzgl. einem Korrekturwert (z.B. +/- 20%). Der Korrekturwert kann als Funktion der Zeit gestaltet werden, so dass er mit der Zeit allmählich abnimmt. Dadurch werden z.B. jahrelang eingebrachte Erfahrungen geschützt, da der Klassifikator 15 durch neue Trainingsdatensätze 17 nicht mehr so stark verändert wird.
- **Fall 1B:**: Der Betreiber bestätigt das ermittelte Ausfallrisiko. Es wird ein neuer Trainingsdatensatz 17 mit dem erfassten Lastprofil und dem ermittelten Ausfallrisiko angelegt.
- **Fall 1C:**: Der Betreiber kann keine Angaben zum tatsächlichen Ausfallrisiko machen. Es wird kein neuer Trainingsdatensatz angelegt.
- **Fall 2:**: Es kommt zu einem Ausfall. Der Betreiber meldet den Ausfall. Es wird ein neuer Trainingsdatensatz 17 mit dem erfassten Lastprofil und einem Ausfallrisiko von 100% angelegt. In jedem Fall wird der Klassifikator 15 nach einer Wartung oder einem Ausfall auf die Initialwerte zurückgesetzt (Block 18) und mit allen dann zur Verfügung stehenden Trainingsdatensätzen 17 neu trainiert. Alternativ könnte der Klassifikator 15 auch nicht zurücksetzt werden und stattdessen nur "nachtrainiert" werden.

Wird dieses Verfahren dank IoT (Internet of Things) von vielen Betreibern auf sehr viele Bauteile gleichen Typs angewendet, so entstehen schnell viele neue Trainingsdatensätze 17 und eine anwachsende Datenbank, so dass die Klassifikation schnell belastbare und damit gewinnbringende Ergebnisse liefert.

Maschinen, z.B. Pumpen, können als eine Ansammlung von Bauteilen betrachtet werden, deren Ausfallrisiken wie oben beschrieben ermittelt werden sollen. Verwendet man anstelle des Ausfallrisikos eine Ausfallwahrscheinlichkeit, so kann wie folgt argumentiert werden: In einem ersten vereinfachenden Ansatz ist die Ausfallwahrscheinlichkeit eines Bauteils unabhängig von denen der anderen Bauteile. Die Ausfallwahrscheinlichkeit der Maschine ist dann die Summe der einzelnen Ausfallwahrscheinlichkeiten.

Anstelle des schnell recht groß werdenden n-dimensionalen Lastprofils (Figur 3) könnte stattdessen auch eine über die Zeit integrierte Belastungsgröße verwendet werden. Bsp.: ∫(*M · ω*)*dt* oder *∫ ϑ_{amb}dt*. Die Integration kann ausgesetzt werden, wenn die Belastungsgrößen derart klein sind, dass keine Schädigungsrelevanz vorliegt.

Das beispielhafte Blockdiagramm der Figur 4b ist analog zur Ausführung gemäß Figur 4a aufgebaut, nur das hier das Verfahren für eine Kreiselpumpe eingesetzt wird und als Eingangsgrößen die Pumpendrehzahl n und der Förderstrom Q betrachtet werden.

## Patentansprüche

1. Verfahren zur Evaluierung einer notwendigen Instandhaltungsmaßnahme für eine Maschine, insbesondere für eine Pumpe, mit den Verfahrensschritten:
Ermittlung einer oder mehrerer, für den Verschleiß oder Schaden eines Maschinenbauteils relevanter Einflussgrößen (1) und Übermittlung an eine Auswerteeinheit, Empfangen der einen oder mehreren Einflussgrößen (1) durch die Auswerteeinheit und Bestimmen (13) eines Ausfallrisikos und/oder einer Ausfallwahrscheinlichkeit wenigstens eines Maschinenbauteils und/oder der Maschine mittels eines Schätzungsmodells, dem die eine oder mehreren Einflussgrößen (1) als Eingangsgrößen zugeführt werden, Generierung einer Empfehlung (14) für eine Instandhaltungsmaßnahme durch die Auswerteeinheit auf Grundlage des bestimmten Ausfallrisikos/der Ausfallwahrscheinlichkeit, wobei das Schätzungsmodell ein Schädigungsrelevanzmodell (15) ist oder dieses umfasst, das die Relevanz der einen oder mehreren Einflussgrößen (1) auf mögliche Schaden und/oder Verschleißerscheinungen beschreibt und eine Schätzung des aktuellen Verschleißfortschritts und/oder Schadensgrad eines Bauteils und/oder Maschine ermöglicht und das Schädigungsrelevanzmodell (15) der Auswerteeinheit auf einem Maschinen Lern-Algorithmus basiert, dem zusätzlich zu der einen oder den mehreren schädigungsrelevanten Einflussgrößen (1) über einen Eingang als Trainingsdatensätze (17) Daten über eine ausgeführte Instandhaltungsmaßnahme der Maschine/eines Maschinenbauteils bereitgestellt werden,
**dadurch gekennzeichnet, dass** ein Trainingsdatensatz (17) eine durch einen Instandhalter bei einer Begutachtung der Maschine/des Bauteils abgeschätzte Ausfallwahrscheinlichkeit/Ausfallrisiko für ein oder mehrere Bauteile und/oder die Maschine umfasst zuzüglich eines Korrekturfaktors, der einen Toleranzbereich für mögliche Abweichungen vom Schätzwert definiert, wobei der Korrekturfaktor mit zunehmender Lebensdauer des Trainingsdatensatzes (17) abnimmt.

2. Verfahren nach Anspruch 1, **dadurch gekennzeichnet, dass** die Auswerteeinheit die Ausfallwahrscheinlichkeit der Maschine aus den Ausfallwahrscheinlichkeiten relevanter Bauteile der Maschine bestimmt.

3. Verfahren nach einem der vorhergehenden Ansprüche, **dadurch gekennzeichnet, dass** Trainingsdatensätze (17) in einer Datenbank hinterlegt und durch die Auswerteeinheit bzw. das Schädigungsrelevanzmodell (15) bei Bedarf abrufbar sind.

4. Verfahren nach Anspruch 3, **dadurch gekennzeichnet, dass** die hinterlegten Trainingsdatensätze (17) für unterschiedliche Maschinen und Bauteile sind, wobei die Maschinen und/oder Bauteile zu unterschiedlichen Clustern zusammengefasst sind, wobei als Kriterien für die Clusterung die Ähnlichkeit der Maschinen/Bauteile zueinander und/oder die Ähnlichkeit ihrer relevanten Einflussgrößen (1) und/oder die Ähnlichkeit ihrer Maschinenanwendung berücksichtigt werden.

5. Verfahren nach Anspruch 3, **dadurch gekennzeichnet, dass** das Schädigungsrelevanzmodell (15) für das Modelltraining auf die Trainingsdatensätze (17) aller oder zumindest eines Großteils der Maschinen und/oder Bauteile eines Clusters zugreift, dem auch die aktuell betrachtete Maschine zugeordnet ist.

6. Verfahren nach dem Anspruch 5,
**dadurch gekennzeichnet,**
**dass** das Schädigungsrelevanzmodell (15) nach einer erfolgten Maschinenwartung und/oder nach einem Ausfall der Maschine bzw. eines Bauteils der Maschine zurückgesetzt wird und anschließend mit allen für die Maschine bzw. das Bauteil im zugeordneten Maschinen-/Bauteil-Cluster verfügbaren Trainingsdatensätzen (17) neutrainiert wird.

7. Verfahren nach einem der vorhergehenden Ansprüche, **dadurch gekennzeichnet,**
**dass** die eine oder mehreren Einflussgrößen (1) eine Belastungsdauer eines Maschinenbauteils bzw. der Maschine und/oder einen Betriebspunkt der Maschine und/oder eine Betriebszeit/Stillstandzeit der Maschine/Bauteils und/oder eine Schalthäufigkeit der Maschine/Bauteils und/oder eine Umgebungs- oder Mediumtemperatur der Maschine charakterisiert.

8. Verfahren nach einem der vorstehenden Ansprüche, **dadurch gekennzeichnet, dass** die Auswerteeinheit eine zeitabhängige Einflussgröße über die Zeit integriert und dem Schädigungsrelevanzmodell (15) die über die Zeit integrierte Einflussgröße als Eingangsgröße zuführt.

9. Verfahren nach einem der vorhergehenden Ansprüche, **dadurch gekennzeichnet, dass** eine oder mehrere Einflussgrößen (1) während der Maschinenlaufzeit, d.h. Online erfasst werden.

10. Verfahren nach einem der vorhergehenden Ansprüche 1 bis 7, **dadurch gekennzeichnet, dass** die Maschine oder eine separate Messeinheit eine oder mehrere Einflussgrößen (1) der Maschine durch einmalige Messung oder Abschätzung bestimmen, insbesondere in Verbindung mit weitergehenden charakteristischen Informationen zur Einflussgröße (1).

11. Verfahren nach einem der vorhergehenden Ansprüche, **dadurch gekennzeichnet, dass** die Generierung einer Empfehlung (14) für eine Instandhaltungsmaßnahme einen flexibel definierbaren Risikobereitschaftswert (16) berücksichtigt.

12. System umfassend eine Auswerteeinheit und ein oder mehrere zu überwachende Maschinen sowie eine optionale Datenbank zur Speicherung von Trainingsdatensätzen (17), wobei die Auswerteeinheit ein Programm aufweist, dessen Befehle die Ausführung des Verfahrens gemäß einem der vorstehenden Ansprüche bewirken.

## Claims

1. Method for evaluating a necessary maintenance measure for a machine, in particular for a pump, having the following method steps:
determining one or more influencing variables (1) relevant to the wear or damage of a machine component and transmitting them to an evaluation unit, receiving the one or more influencing variables (1) by way of the evaluation unit and ascertaining (13) a risk of failure and/or a likelihood of failure of at least one machine component and/or of the machine by way of an estimation model to which the one or more influencing variables (1) are supplied as input variables, generating a recommendation (14) for a maintenance measure by way of the evaluation unit on the basis of the ascertained risk of failure/the likelihood of failure, wherein the estimation model is or comprises a damage relevance model (15) that describes the relevance of the one or more influencing variables (1) on possible damage and/or wear and enables an estimate of the current advancement of wear and/or degree of damage of a component and/or machine and the damage relevance model (15) of the evaluation unit is based on a machine learning algorithm to which data about a performed maintenance measure of the machine/of a machine component are provided as training datasets (17) via an input in addition to the one or more damage-relevant influencing variables (1),
**characterized in that** a training dataset (17) comprises a likelihood of failure/risk of failure for one or more components and/or the machine as estimated by a member of maintenance staff when assessing the machine/the component plus a correction factor that defines a tolerance range for possible deviations from the estimated value, wherein the correction factor decreases as the service life of the training dataset (17) increases.

2. Method according to Claim 1, **characterized in that** the evaluation unit ascertains the likelihood of failure of the machine from the likelihoods of failure of relevant components of the machine.

3. Method according to either of the preceding claims, **characterized in that** training datasets (17) are stored in a database and may be retrieved by the evaluation unit or the damage relevance model (15) when required.

4. Method according to Claim 3, **characterized in that** the stored training datasets (17) are for different machines and components, wherein the machines and/or components are combined to form different clusters, wherein the similarity between the machines/components and/or the similarity between their relevant influencing variables (1) and/or the similarity between their machine application are taken into consideration as criteria for the clustering.

5. Method according to Claim 3, **characterized in that** the damage relevance model (15) for the model training accesses the training datasets (17) of all or at least the majority of the machines and/or components of a cluster to which the machine currently under consideration is also assigned.

6. Method according to Claim 5, **characterized in that** the damage relevance model (15) is reset after machine maintenance has been performed and/or after a failure of the machine or of a component of the machine and then retrained with all training datasets (17) available for the machine or the component in the assigned machine/component cluster.

7. Method according to one of the preceding claims, **characterized in that** the one or more influencing variables (1) characterizes a loading duration of a machine component or of the machine and/or an operating point of the machine and/or an operating time/downtime of the machine/component and/or a switching frequency of the machine/component and/or an ambient or medium temperature of the machine.

8. Method according to one of the preceding claims, **characterized in that** the evaluation unit time-integrates a time-dependent influencing variable and supplies the time-integrated influencing variable to the damage relevance model (15) as input variable.

9. Method according to one of the preceding claims, **characterized in that** one or more influencing variables (1) are acquired during the machine uptime, that is to say online.

10. Method according to one of preceding Claims 1 to 7, **characterized in that** the machine or a separate measuring unit ascertains one or more influencing variables (1) of the machine through a one-off measurement or estimate, in particular in connection with further characteristic information about the influencing variable (1).

11. Method according to one of the preceding claims, **characterized in that** the generation of a recommendation (14) for a maintenance measure takes into consideration a flexibly definable risk tolerance value (16).

12. System comprising an evaluation unit and one or more machines to be monitored, and an optional database for storing training datasets (17), wherein the evaluation unit contains a program the instructions of which bring about the execution of the method according to one of the preceding claims.

## Revendications

1. Procédé d'évaluation d'une mesure de maintenance nécessaire pour une machine, plus particulièrement une pompe, comportant les étapes de procédé suivantes :
la détermination d'une ou plusieurs variables d'influence (1) pertinentes pour l'usure ou la détérioration d'un composant de machine et leur transmission à une unité d'évaluation, la réception de la ou des variables d'influence (1) par l'unité d'évaluation et la détermination (13) d'un risque de défaillance et/ou d'une probabilité de défaillance d'au moins un composant de machine et/ou de la machine au moyen d'un modèle d'estimation, auquel la ou les variables d'influence (1) sont fournies en tant que variables d'entrée, la génération d'une recommandation (14) pour une mesure de maintenance par l'unité d'évaluation sur la base du risque de défaillance/de la probabilité de défaillance déterminés, le modèle d'estimation étant ou comprenant un modèle de pertinence des dommages (15) qui décrit la pertinence de la ou des variables d'influence (1) sur d'éventuels dommages et/ou l'apparition d'usure et permet une estimation de l'avancement actuel de l'usure et/ou du degré de dommage d'un composant et/ou de la machine et le modèle de pertinence des dommages (15) de l'unité d'évaluation étant basé sur un algorithme d'apprentissage automatique, auquel, en plus de la ou des variables d'influence (1) pertinentes pour les dommages, des données concernant une mesure de maintenance exécutée de la machine/d'un composant de machine sont fournies par l'intermédiaire d'une entrée sous forme de jeux de données d'entraînement (17),
**caractérisé en ce qu'**un jeu de données d'entraînement (17) comprend une probabilité de défaillance/un risque de défaillance estimé par un agent de maintenance lors d'un examen de la machine/du composant pour un ou plusieurs composants et/ou la machine, en plus d'un facteur de correction qui définit une plage de tolérance pour d'éventuels écarts par rapport à la valeur estimée, le facteur de correction diminuant lorsque la durée de vie du jeu de données d'entraînement (17) croît.

2. Procédé selon la revendication 1, **caractérisé en ce que** l'unité d'évaluation détermine la probabilité de défaillance de la machine à partir des probabilités de défaillance des composants pertinents de la machine.

3. Procédé selon l'une quelconque des revendications précédentes, **caractérisé en ce que** des jeux de données d'entraînement (17) sont stockés dans une base de données et peuvent être consultés en cas de besoin par l'unité d'évaluation et/ou le modèle de pertinence des dommages (15).

4. Procédé selon la revendication 3, **caractérisé en ce que** les jeux de données d'entraînement (17) stockés sont destinés à différentes machines et à différents composants, les machines et/ou les composants étant regroupés en différentes grappes, des critères pour le regroupement en grappes tels que la similarité des machines/composants entre eux et/ou la similarité de leurs variables d'influence (1) pertinentes et/ou la similarité de leur application de machine étant pris en compte.

5. Procédé selon la revendication 3, **caractérisé en ce que** le modèle de pertinence des dommages (15) accède, pour l'entraînement du modèle, aux jeux de données d'entraînement (17) de la totalité ou d'au moins une grande partie des machines et/ou composants d'une grappe, à laquelle la machine actuellement considérée est également assignée.

6. Procédé selon la revendication 5, **caractérisé en ce que** le modèle de pertinence des dommages (15) est réinitialisé après une maintenance de la machine effectuée et/ou après une défaillance de la machine ou d'un composant de la machine, puis est de nouveau entraîné avec tous les jeux de données d'entraînement (17) disponibles pour la machine ou le composant de la grappe de machines/composants assignée.

7. Procédé selon l'une quelconque des revendications précédentes, **caractérisé en ce que** la ou les variables d'influence (1) caractérisent une durée de sollicitation d'un composant de machine ou de la machine et/ou un point de fonctionnement de la machine et/ou une durée de fonctionnement/durée d'arrêt de la machine/du composant et/ou une fréquence de commutation de la machine/du composant et/ou une température ambiante ou de fluide de la machine.

8. Procédé selon l'une quelconque des revendications précédentes, **caractérisé en ce que** l'unité d'évaluation intègre une variable d'influence dépendant du temps sur le temps et fournit au modèle de pertinence des dommages (15) la variable d'influence intégrée sur le temps en tant que variable d'entrée.

9. Procédé selon l'une quelconque des revendications précédentes, **caractérisé en ce qu'**une ou plusieurs variables d'influence (1) sont acquises pendant la durée de fonctionnement de la machine, c'est-à-dire lorsqu'elle est en ligne.

10. Procédé selon l'une quelconque des revendications 1 à 7, **caractérisé en ce que** la machine ou une unité de mesure séparée détermine une ou plusieurs variables d'influence (1) de la machine par une mesure ou estimation unique, en particulier en liaison avec des informations caractéristiques supplémentaires relatives à la variable d'influence (1).

11. Procédé selon l'une quelconque des revendications précédentes, **caractérisé en ce que** la génération d'une recommandation (14) pour une mesure de maintenance prend en compte une valeur de tolérance au risque (16) définissable de manière flexible.

12. Système comprenant une unité d'évaluation et une ou plusieurs machines à surveiller ainsi qu'une base de données facultative pour le stockage de jeux de données d'entraînement (17), l'unité d'évaluation possédant un programme dont les instructions mettent en œuvre l'exécution du procédé selon l'une quelconque des revendications précédentes.
